# EUROPEAN PATENT APPLICATION

(11) **EP 4 009 143 A1**
(43) Date of publication of application: **08.06.2022**
(21) Application number: 20211655.4
(22) Date of filing: 03.12.2020
(51) Int. Cl.: G06F 3/01

(54) **OPERATING METHOD BY GESTURES IN EXTENDED REALITY AND HEAD-MOUNTED DISPLAY SYSTEM**

(71) Applicant: XRSpace CO., LTD., Taoyuan City 330 (TW)
(72) Inventor: KUO, Sheng-Hsiu, 104 Taipei City (TW)
(74) Representative: Emde, Eric

(57) **Abstract**

An operating method by gestures in extended reality (XR) and a head-mounted display (HMD) system (100) are provided. A first gesture is identified in a first image (OM). The first gesture corresponds to a user's hand. A virtual hand (LH, RH) and a first interactive object (io1, io3) located on an interactive area are presented in response to an identified result of the first gesture. The virtual hand (LH, RH) makes the first gesture. A second gesture, different from the first gesture, corresponding to the user's hand is identified in a second image (OM). The second gesture interacts with the first interactive object (io1, io3) in the interactive area. The virtual hand (LH, RH) and a second interactive object (io2, io4) are presented on the display (120) in response to an identified result of the second gesture. The virtual hand (LH, RH) makes the second gesture. Accordingly, intuitive gesture control is provided.

## Description

### TECHNICAL FIELD

The present disclosure generally relates to a virtual simulation, in particular, to an operating method by gestures in extended reality (XR) and a head-mounted display system.

### BACKGROUND

Extended reality (XR) technologies for simulating senses, perception, and/or environment, such as virtual reality (VR), augmented reality (AR) and mixed reality (MR), are popular nowadays. The aforementioned technologies can be applied in multiple fields, such as gaming, military training, healthcare, remote working, etc. In the XR, when a user wears a head-mounted display (HMD), the user may use his/her hand to make a gesture and further trigger a specific function. The function may be related to hardware or software control. That's easy for the user to use his/her hand to control the head-mounted display system.

### SUMMARY OF THE DISCLOSURE

Accordingly, the present disclosure is directed to an operating method by gestures in XR and a head-mounted display system, to provide an intuitive gesture control.

In one of the exemplary embodiments, an operating method by gestures in XR includes, but is not limited to, the following steps. A first gesture is identified in a first image. The first gesture corresponds to a user's hand. A virtual hand and a first interactive object located on an interactive area is presented in response to an identified result of the first gesture. The virtual hand makes the first gesture. A second gesture is identified in a second image. The second gesture corresponds to the user's hand and is different from the first gesture. The second gesture interacts with the first interactive object in the interactive area. The virtual hand and a second interactive object are presented on the display in response to an identified result of the first gesture and the second gesture. The virtual hand makes the second gesture. The number of the virtual hand may be one or two. The virtual hand may be a full-body or half-body avatar's hand in XR.

In one of the exemplary embodiments, a head-mounted display system includes, but is not limited to, an image capturing device, a display, and a processor. The image capturing device captures images. The processor is coupled to the image capturing device and the display. The processor is configured to perform the following steps. The processor identifies a first gesture in a first image captured by the image capturing device. The first gesture corresponds to a user's hand. The processor presents a virtual hand and a first interactive object located on an interactive area on the display in response to an identified result of the first gesture. The virtual hand makes the first gesture. The processor identifies a second gesture in a second image captured by the image capturing device. The second gesture corresponds to the user's hand and is different from the first gesture, and the second gesture interacts with the first interactive object in the interactive area. The processor presents the virtual hand and a second interactive object on the display in response to an identified result of the first gesture and the second gesture. The virtual hand makes the second gesture. The number of the virtual hand may be one or two. The virtual hand may be a full-body or half-body avatar's hand in XR.

In light of the foregoing, according to the operating method and the head-mounted display system, two consecutive gestures would be identified in two images, and the gesture combination may trigger the display to present different interactive objects. Furthermore, one interactive object is provided to further interact with the virtual hand. Accordingly, a convenient and interesting way to control the head-mounted display system.

It should be understood, however, that this Summary may not contain all of the aspects and embodiments of the present disclosure, is not meant to be limiting or restrictive in any manner, and that the invention as disclosed herein is and will be understood by those of ordinary skill in the art to encompass obvious improvements and modifications thereto.

### BRIEF DESCRIPTION OF THE DRAWINGS

The accompanying drawings are included to provide a further understanding of the disclosure, and are incorporated in and constitute a part of this specification. The drawings illustrate embodiments of the disclosure and, together with the description, serve to explain the principles of the disclosure.
FIG. 1 is a block diagram illustrating a head-mounted display system according to one of the exemplary embodiments of the disclosure.
FIG. 2 is a flowchart illustrating an operating method by gestures in extended reality (XR) according to one of the exemplary embodiments of the disclosure.
FIG. 3 is a schematic diagram illustrating the prediction of gesture classifier according to one of the exemplary embodiments of the disclosure.
FIG. 4A and FIG. 4B are schematic diagrams illustrating the triggering of interactive objects by gestures according to one of the exemplary embodiments of the disclosure.
FIG. 5A and FIG. 5B are schematic diagrams illustrating the triggering of interactive objects by gestures according to one of the exemplary embodiments of the disclosure.
FIG. 6A and FIG. 6B are schematic diagrams illustrating the triggering of interactive objects by gestures according to one of the exemplary embodiments of the disclosure.

### DESCRIPTION OF THE EMBODIMENTS

Reference will now be made in detail to the present preferred embodiments of the disclosure, examples of which are illustrated in the accompanying drawings. Wherever possible, the same reference numbers are used in the drawings and the description to refer to the same or like parts.

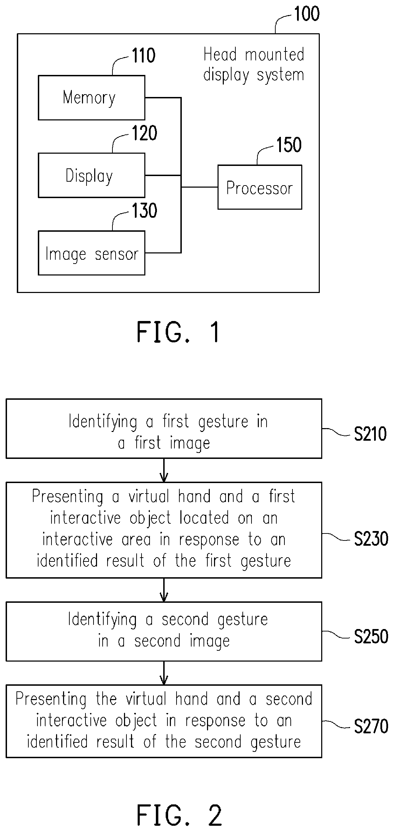

FIG. 1 is a block diagram illustrating a head-mounted display system 100 according to one of the exemplary embodiments of the disclosure. Referring to FIG. 1, the head-mounted display (HMD) system 100 includes, but is not limited to, a memory 110, a display 120, an image capturing device 130, and a processor. The HMD system 100 is adapted for XR or other reality simulation related technology.

The memory 110 may be any type of a fixed or movable random-access memory (RAM), a read-only memory (ROM), a flash memory, a similar device, or a combination of the above devices. The memory 110 records program codes, device configurations, buffer data, or permanent data (such as images, gesture classifier, predefined gesture, or settings), and these data would be introduced later.

The display 120 could be an LCD, a LED display, or an OLED display.

The image capturing device 130 could be a camera, such as a monochrome camera or a color camera, a deep camera, a video recorder, or other image capturing devices capable of capturing images.

The processor 150 is coupled to the memory 110, the display 120, and the image capturing device 130. The processor 150 is configured to load the program codes stored in the memory 110, to perform a procedure of the exemplary embodiment of the disclosure.

In some embodiments, the processor 150 may be a central processing unit (CPU), a microprocessor, a microcontroller, a graphics processing unit (GPU), a digital signal processing (DSP) chip, a field-programmable gate array (FPGA). The functions of the processor 150 may also be implemented by an independent electronic device or an integrated circuit (IC), and operations of the processor 150 may also be implemented by software.

In one embodiment, an HMD or digital glasses includes the memory 110, the display 120, the image capturing device 130, and the processor 150. In some embodiments, the processor 150 may not be disposed in the same apparatus with the display 120 and/or the image capturing device 130. However, the apparatuses respectively equipped with the display 120, the image capturing device 130, and the processor 150 may further include communication transceivers with compatible communication technology, such as Bluetooth, Wi-Fi, and IR wireless communications, or physical transmission line, to transmit or receive data with each other. For example, the processor 150 may be disposed in an HMD while the image capturing device 130 is disposed outside the HMD. For another example, the processor 150 may be disposed in a computing device while the display 120 being disposed outside the computing device.

To better understand the operating process provided in one or more embodiments of the disclosure, several embodiments will be exemplified below to elaborate the head-mounted display system 100. The devices and modules in the system 100 are applied in the following embodiments to explain the operating method by gestures in XR provided herein. Each step of the method can be adjusted according to actual implementation situations and should not be limited to what is described herein.

FIG. 2 is a flowchart illustrating an operating method by gestures in extended reality (XR) according to one of the exemplary embodiments of the disclosure. Referring to FIG. 2, the processor 150 may identify a first gesture in a first image captured by the image capturing device 130 (step S210). Specifically, the first gesture is a predefined gesture, such as palm-up, palm-down, hand wave, or fist gesture. The first gesture corresponds to the user's hand. Firstly, the processor 150 may identify the hand in the image. Then, the processor 150 may identify the gesture made by a user's hand in the first image and compare whether the identified gesture is the predefined first gesture.

In one embodiment, the processor 150 may identify joints of the user's hand from the first image, and predict the gesture of the user's hand based on the first image and the identified joints of the user's hand through a gesture classifier. Specifically, the positions of hand joints are related to the hand gesture. Furthermore, the outline, size, texture, shape, and other features in the image are related to the hand gesture. The designer may prepare lots of images including the predefined gesture as training samples, and use the training samples to train the gesture classifier by a machine learning algorithm (such as deep learning, artificial neural network (ANN), or support vector machine (SVM)) configured with gesture recognition function. Furthermore, hand joints are identified in these training samples, and the hand joints would be another training sample to train the same gesture classifier or another gesture classifier. Then, the trained gesture classifier can be used to determine which gesture is made in the input image.

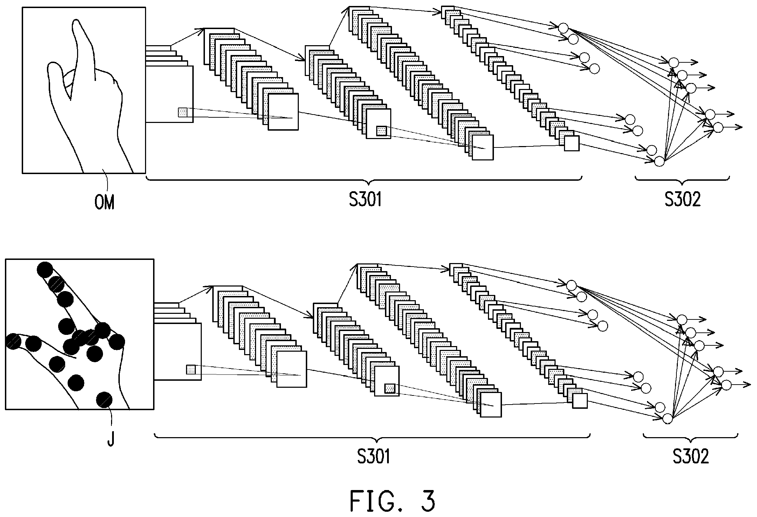

In some embodiments, the processor 150 may predict the gesture merely based on the first image and without the identified joints of the user's hand, and then confirm the predicted gesture based on the identified joints of the user's hand. For example, FIG. 3 is a schematic diagram illustrating the prediction of gesture classifier according to one of the exemplary embodiments of the disclosure. Referring to FIG. 3, if an image OM, which includes a gesture, is inputted into the gesture classifier, the features would be extracted from the image OM (step S301, i.e., feature extraction). For example, in step S301, the processor 150 performs convolution calculation on a filter, which includes pixel values of the image OM, with the corresponding kernel to output a feature map. The features may be the texture, corner, edge, or shape. Then, the processor 150 may classify the features extracted from step S301 such as the feature map (step S302, i.e., classification). It should be noticed the one gesture classifier may be configured with one or more labels (i.e., one or more gestures in this embodiment). The gesture classifier may output the determined gesture.

After one or more gestures are determined merely based on the image OM, the image OM having identified hand joints J would be inputted into the same or another gesture classifier. Similarly, the processor 150 may perform the feature extraction (step S301) and classification (step S302) on the image OM having identified hand joints J, to output the determined gesture. The subsequently determined gesture is used to check the correctness of the firstly determined gesture. For example, if both determined gestures are the same, the processor 150 may confirm the gesture. If determined gestures are different, the processor 150 may determine the gesture in another image.

In one embodiment, the processor 150 may further identify the right hand and the left hand of the user. It means that the processor 150 knows which hand makes the gesture or be captured by the image capturing device 130 (i.e., the hand is located within the field of view (FOV) of the image capturing device 130). In some embodiments, the processor 150 may define different predefined gestures or the same predefined gesture for the right hand and the left hand of the user, respectively. For example, one function would be triggered by the thumb up gesture with the right hand or the left hand. For another example, another function would be triggered by the index finger up gesture with the right hand, but the same function would be triggered by the little finger up gesture with the left hand.

It should be noticed that there are still lots of gesture recognition algorithm, for example, the 3D model-based algorithms, the skeletal-based algorithms, the appearance-based models, or the electromyography-based models. Those algorithms may be implemented for actual requirements.

The processor 150 may present a virtual hand and a first interactive object located on an interactive area on the display 120 in response to the identified result of the first gesture (step S230). Specifically, if the identified result is that the gesture in the first image is identical to the first gesture, a virtual hand corresponding to the user's hand would make the first gesture. The processor 150 may present the virtual hand, which makes the first gesture, on the display 120, so that the user may know whether he/she makes the right gesture. However, if the identified gesture of the first image is not the first gesture, the processor 150 may still present the identified gesture on the display 120. Furthermore, the first gesture is used to trigger the display 120 shows the first interactive object. It means that the first interactive object may not be shown on the display 120 until the user makes the first gesture. The first interactive object could be a picture, a video, a virtual ball, or other virtual objects. The first interactive object is located on an interactive area of the virtual hand or an avatar's hand. It means that the fingers, palm, or other parts of the virtual hand may be able to interact with any object located in the interactive area. For example, the finger may touch a virtual key, or the palm may hold a virtual ball in the interactive area. It should be noticed that the shape and location of the interactive area may be modified based on actual requirements. Furthermore, the number of the virtual hand may be one or two. The virtual hand may be a full-body or half-body avatar's hand in XR

In one embodiment, the first interactive object is used to notify the user that it can be interacted and makes the user try to do another gesture. That is, the first interactive object is related to a hint of a subsequent gesture. For example, the first interactive object is a virtual ball, and the user may try to hold or grasp the virtual ball.

The processor 150 may identify a second gesture in a second image (step S250). Specifically, the second gesture is another predefined gesture, such as palm-up, palm-down, crossed fingers, or fist gesture, but different from the first gesture. The second gesture also corresponds to the user's hand. The processor 150 may identify the gesture made by a user's hand in the second image and compare whether the identified gesture is the predefined second gesture.

In one embodiment, as mentioned detailedly in step S210, the processor 150 may identify joints of the user's hand from the second image, and predict the gesture of the user's hand based on the second image and the identified joints of the user's hand through the gesture classifier. In some embodiments, as mentioned detailedly in step S210, the processor 150 may predict the gesture merely based on the second image and without the identified joints of the user's hand, and then confirm the predicted gesture based on the identified joints of the user's hand.

The processor 150 may present the virtual hand and a second interactive object on the display 120 in response to the identified result of the second gesture (step S270). Specifically, if the identified result is that the gesture in the second image is identical to the second gesture, the virtual hand corresponding to the user would make the second gesture. The processor 150 may present the virtual hand, which makes the second gesture, on the display 120, and the hand with the second gesture may interact with the first interactive object in the interactive area. For example, the virtual hand grasps the virtual ball. In some embodiment, an animation for the deformation of the first interactive object may be presented on the display 120. For example, the virtual ball is squeezed. However, if the identified gesture of the second image is not the second gesture, the processor 150 may still present the identified gesture on the display 120. Furthermore, the first interactive object may be hidden because of the wrong gesture.

Furthermore, the combination of the first and the second gesture is used to trigger the display 120 to show the second interactive object but hide the first interactive object. It means that the second interactive object may not be shown on the display 120 until the user makes the first gesture and then the second gesture. If a third gesture different from the second gesture is identified in the second image after the first gesture has been identified in the first image, the first interactive object is still presented on the display 120 and the second interactive object would not be shown. The second interactive object could be a picture, a video, a menu, or other virtual objects. On the other hand, because the second gesture is identified, the first interactive object, which is the hint of the second gesture, need not be shown. Therefore, the first interactive object may help the user make the combination of the first and second gestures intuitively.

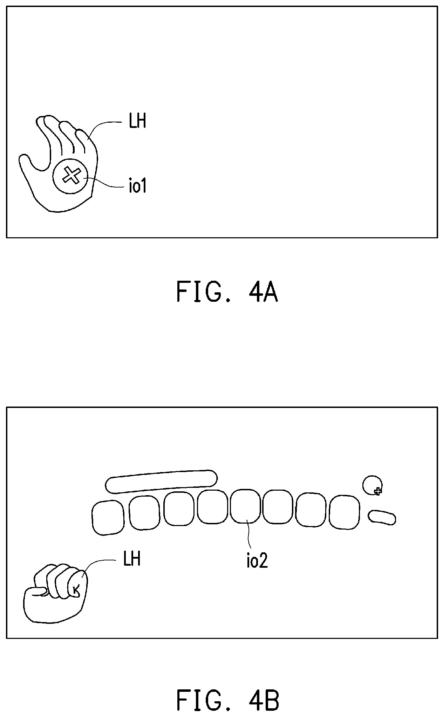

For example, FIG. 4A and FIG. 4B are schematic diagrams illustrating the triggering of interactive objects by gestures according to one of the exemplary embodiments of the disclosure. Referring to FIG. 4A, the palm-up gesture, which is defined as the first gesture, is identified in the first image with the left hand at the first time point. The virtual left hand LH with the palm-up gesture and a virtual ball iol(i.e., the first interactive object) would be presented on the display 120. Referring to FIG. 4B, the fist gesture, which is defined as the second gesture, is identified in the second image with the left hand at the second time point. The virtual left hand LH with the fist gesture and the main menu io2 (i.e., the second interactive object) would be presented on the display 120. The main menu io2 includes multiple icons, such as icons for a friend list, a map, and an app store.

In one embodiment, the second interactive object includes a first menu and a second menu. The second menu is different from the first menu. The processor 150 may present the first menu on the display 120 if the right hand is identified, and present a second menu on the display 120 if the left hand is identified. It means that if the combination of the first and second gestures is made by the right hand, the first menu would be shown on the display 120. However, if the combination of the first and second gestures is made by the left hand, the second menu would be shown on the display 120.

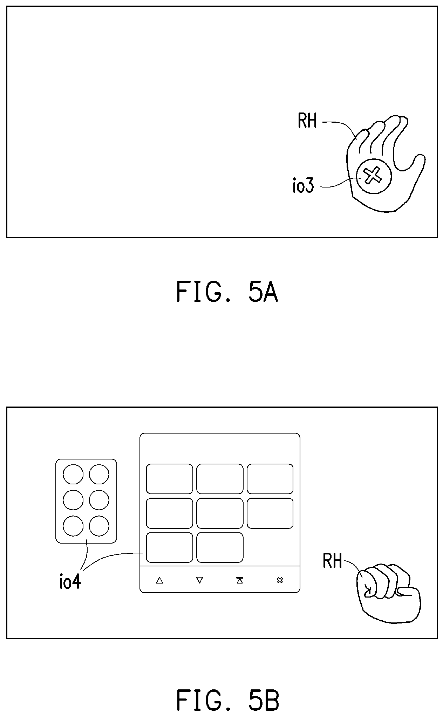

For example, the second menu is the main menu io2 as shown in FIG. 4B. FIG. 5A and FIG. 5B are schematic diagrams illustrating the triggering of interactive objects by gestures according to one of the exemplary embodiments of the disclosure. Referring to FIG. 5A, the palm-up gesture, which is defined as the first gesture, is identified in the first image with the right hand at the third time point. The virtual right hand RH with the palm-up gesture and a virtual ball io3 (i.e., the first interactive object) would be presented on the display 120. Referring to FIG. 5B, the fist gesture, which is defined as the second gesture, is identified in the second image with the left hand at the fourth time point. The virtual right hand RH with the fist gesture and the quick settings menu io4 (i.e., the second interactive object or the first menu) would be presented on the display 120. The quick settings menu io4 includes multiple icons, such as icons for turning on/off camera, making a specific motion on the virtual hand, and messaging.

In one embodiment, the processor 150 may further hide the first interactive object on the display 120 if the second gesture is detected. It means that there is no need to furthermore instruct a subsequent gesture, and the first interactive object would be invisible. Therefore, merely the second interactive object is presented on the display 120. Taking FIGs. 5A and 5B as an example, after the fist gesture is identified, the virtual ball io3 is hidden.

In another embodiment, if the second interactive object has been shown on the display 120 and the identified result of the first gesture and the second gesture is confirmed (i.e., the combination of the first and second gestures is made by the user), the processor 150 may hide the first interactive object and the second interactive object on the display 120. Therefore, the menu can be turned off by the gestures.

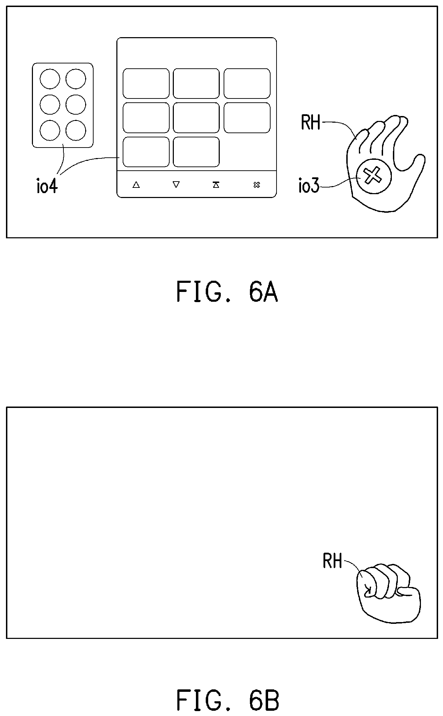

For example, FIG. 6A and FIG. 6B are schematic diagrams illustrating the triggering of interactive objects by gestures according to one of the exemplary embodiments of the disclosure. Referring to FIG. 6A, the quick settings menu io4 has been shown on the display 120. The virtual ball io3 is presented because of the palm-up gesture with the right hand RH Referring to FIG. 6B, both the virtual ball io3 and the quick settings menu io4 are hidden because of the fist gesture with the right hand RH.

It should be noticed that the first and second interactive objects and gestures in FIGs. 4A-6B can be modified based on actual requirements, and the embodiments are not limited thereto.

In summary, the exemplary embodiments described above depicted the operating method by gestures in the XR and the head-mounted display system. The gesture combination is identified in two images and is used for presenting the second interactive object in the display. Furthermore, the first interactive object may be shown after the first gesture is identified, to further prompt to make the second gesture. Accordingly, intuitive gesture control is provided.

## Claims

1. An operating method by gestures in extended reality (XR), **characterized by** comprising:
identifying a first gesture in a first image (OM), wherein the first gesture corresponds to a user's hand;
presenting a virtual hand (LH, RH) and a first interactive object (iol, io3) located on an interactive area in response to an identified result of the first gesture, wherein the virtual hand (LH, RH) makes the first gesture;
identifying a second gesture in a second image (OM), wherein the second gesture corresponds to the user's hand and is different from the first gesture, and the second gesture interacts with the first interactive object (iol, io3) in the interactive area;
presenting the virtual hand (LH, RH) and a second interactive object (io2, io4) in response to an identified result of the second gesture, wherein the virtual hand (LH, RH) makes the second gesture.

2. A head-mounted display system (100), comprising:
an image capturing device (130), capturing images (OM);
a display (120); and
a processor (150), coupled to the image capturing device (130) and the display (120), **characterized in that** the processor (150) is configured for:
identifying a first gesture in a first image (OM) captured by the image capturing device (130), wherein the first gesture corresponds to a user's hand;
presenting a virtual hand (LH, RH) and a first interactive object (iol, io3) located on an interactive area on the display (120) in response to an identified result of the first gesture, wherein the virtual hand (LH, RH) makes the first gesture;
identifying a second gesture in a second image (OM) captured by the image capturing device (130), wherein the second gesture corresponds to the user's hand and is different from the first gesture, and the second gesture interacts with the first interactive object (iol, io3) in the interactive area;
presenting the virtual hand (LH, RH) and a second interactive object (io2, io4) on the display (120) in response to an identified result of the second gesture, wherein the virtual hand (LH, RH) makes the second gesture.

3. The operating method of claim 1, **characterized in that** the step of identifying the first gesture or the second gesture comprises:
identifying joints (J) of the user's hand from the first or the second image (OM); and
predicting a gesture of the user's hand based on the first or the second image (OM) and the identified joints (J) of the user's hand through a gesture classifier, wherein the gesture classifier is trained by a machine learning algorithm, or the head-mounted display system (100) of claim 2, **characterized in that** the processor (150) is further configured for:
identifying joints (J) of the user's hand from the first or the second image (OM); and
predicting a gesture of the user's hand based on the first or the second image (OM) and the identified joints (J) of the user's hand through a gesture classifier, wherein the gesture classifier is trained by a machine learning algorithm.

4. The operating method of claim 3, **characterized in that** the step of predicting the gesture of the user's hand comprises:
predicting the gesture merely based on the first or the second image (OM) and without the identified joints (J) of the user's hand; and
confirming the predicted gesture based on the identified joints (J) of the user's hand, or the head-mounted display system (100) of claim 3, **characterized in that** the processor (150) is further configured for:
predicting the gesture merely based on the first or the second image (OM) and without the identified joints (J) of the user's hand; and
confirming the predicted gesture based on the identified joints (J) of the user's hand.

5. The operating method of claim 1, **characterized by** further comprising:
hiding the first interactive object (iol, io3) in response to the identified result of the second gesture, or the head-mounted display system (100) of claim 2, **characterized in that** the processor (150) is further configured for:
hiding the first interactive object (iol, io3) in response to the identified result of the second gesture.

6. The operating method of claim 1, **characterized by** further comprising:
hiding the first interactive object (iol, io3) and the second interactive object (io2, io4) in response to the identified result of the second gesture, or the head-mounted display system (100) of claim 2, **characterized in that** the processor (150) is further configured for:
hiding the first interactive object (iol, io3) and the second interactive object (io2, io4) in response to the identified result of the second gesture.

7. The operating method of claim 1, **characterized in that** the step of identifying the first gesture or the second gesture comprises:
identifying one of a right hand and a left hand of the user, and the step of presenting the second interactive object (io2, io4) comprises:
presenting a first menu in response to the right hand being identified; and
presenting a second menu in response to the left hand being identified, wherein the second menu is different from the first menu, and the second interactive object (io2, io4) comprises the first menu and the second menu, or the head-mounted display system (100) of claim 2, **characterized in that** the processor (150) is further configured for:
identifying one of a right hand and a left hand of the user;
presenting a first menu on the display (120) in response to the right hand being identified; and
presenting a second menu on the display (120) in response to the left hand being identified, wherein the second menu is different from the first menu, and the second interactive object (io2, io4) comprises the first menu and the second menu.

8. The operating method of claim 7 or the head-mounted display system (100) of claim 7, **characterized in that** the first menu corresponds to a quick settings menu, and the second menu corresponds to a main menu.

9. The operating method of claim 1 or the head-mounted display system (100) of claim 2, **characterized in that** the first gesture is a palm-up gesture, and the second gesture is a fist gesture.
